(19)

Europäisches
Patentamt
European
Patent Office
Office européen
des brevets

(11) **EP 2 127 395 B1**

(12) **EUROPEAN PATENT SPECIFICATION**

(45) Date of publication and mention
of the grant of the patent:
**17.08.2016 Bulletin 2016/33**

(51) Int Cl.:
*H04N 19/105* *(2014.01)*  *H04N 19/70* *(2014.01)*
*H04N 19/46* *(2014.01)*  *H04N 19/30* *(2014.01)*
*H04N 19/61* *(2014.01)*  *H04N 19/187* *(2014.01)*

(21) Application number: **07702037.8**

(22) Date of filing: **10.01.2007**

(86) International application number:
**PCT/CN2007/000105**

(87) International publication number:
**WO 2008/083521 (17.07.2008 Gazette 2008/29)**

(54) **VIDEO ENCODING METHOD AND VIDEO DECODING METHOD FOR ENABLING BIT DEPTH SCALABILITY**

VIDEOCODIERUNGSVERFAHREN UND VIDEOCODIERUNGSVERFAHREN ZUR ERMÖGLICHUNG VON BITTIEFENSKALIERBARKEIT

PROCÉDÉ DE CODAGE VIDÉO ET PROCÉDÉ DE DÉCODAGE VIDÉO PERMETTANT UNE ÉCHELONNABILITÉ DE PROFONDEUR DE BITS

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**02.12.2009 Bulletin 2009/49**

(73) Proprietor: **Thomson Licensing**
**92130 Issy-les-Moulineaux (FR)**

(72) Inventors:
• **GAO, Yongying**
**Beijing 100085 (CN)**
• **WU, Yuwen**
**Beijing 100085 (CN)**

(74) Representative: **Huchet, Anne et al**
**Technicolor**
**1, rue Jeanne d'Arc**
**92443 Issy-les-Moulineaux (FR)**

(56) References cited:
WO-A1-2008/019524    WO-A1-2008/043198
WO-A1-2008/049271    CN-A- 1 636 394
CN-A- 1 810 036    US-A1- 2004 264 792
US-A1- 2005 259 729

• **GAO Y ET AL: "Apps & Reqs for color bit depth SVC", 21. JVT MEETING; 78. MPEG MEETING; 20-10-2006 - 27-10-2006; HANGZHOU,CN; (JOINT VIDEO TEAM OF ISO/IEC JTC1/SC29/WG11 AND ITU-T SG.16 ),, no. JVT-U049, 26 October 2006 (2006-10-26) , XP030006695, ISSN: 0000-0407**
• **SEGALL A ET AL: "Tone mapping SEI", 19. JVT MEETING; 31-03-2006 - 07-04-2006; GENEVA, CH; (JOINT VIDEOTEAM OF ISO/IEC JTC1/SC29/WG11 AND ITU-T SG.16 ),, no. JVT-S087, 1 April 2006 (2006-04-01), XP030006466, ISSN: 0000-0409**

## Description

### Field of this Invention

This invention relates to the technical field of digital video coding. It presents a technical solution for a novel type of scalability: bit depth scalability. New syntax elements and semantics are presented to be added to support bit depth scalability.

### Background of the Invention

In recent years, higher bit color depth rather than the conventional eight bit color depth is more and more desirable in many fields, such as scientific imaging, digital cinema, high-quality-video-enabled computer games, and professional studio and home theatre related applications. Accordingly, the state-of-the-art video coding standard - H.264/AVC - has already included Fidelity Range Extensions, which support up to 14 bits per sample and up to 4:4:4 chroma sampling.

However, none of the existing high bit coding solutions supports color bit depth scalability. Assume that we have a scenario with 2 different decoders.(or clients with different requests for the color bit depth, e.g. 12 bit) for the same raw video. The existing H.264/AVC solution is to encoder the 12-bit raw video to generate bitstream no. 1 and then convert the 12-bit raw video to an 8-bit raw video and encode the 8-bit counterpart to generate bitstream no. 2. If we want to deliver the video to different clients that request different bit depths, we have to deliver it twice, or put the 2 bitstreams in one disk together. It is of low efficiency regarding both the compression ratio and the operational complexity.

Published patent application WP 2008/049271 (published after the priority date of the current application, but with an earlier filing date) discloses a syntax framework to make bit-depth scalability possible in the framework of H.264/AVC scalable extension SVC. In particular, it discloses using a flag (bit_depth_scalability_flag) to signal whether inter-layer prediction for bit-depth scalability is active or not. Furthermore, if inter-layer prediction for bit-depth scalability is active, a further flag signals whether a simple bit-shift operation is used or whether advanced color bit depth prediction is used. No details are however, provided, as to possible advanced color bit depth prediction techniques.

Document JVT-U049 defines requirements and basic elements of color bit depth scalability in the framework of H.264. It mentions three different inter-layer prediction techniques: simple bit-depth truncation, dithering and more advanced inter-layer prediction algorithms. No example or further teaching is included with reference to the latter algorithms.

Document JVT-S087 discloses different tone mapping techniques (i.e. models) for converting higher bit-depth images into lower bit-depth images. Furthermore, the document discloses the syntax to signal the model parameters using an H.264 SEI message

### Summary of the Invention

This invention presents a technical solution to encode in a scalable manner the whole 12-bit raw video once to generate one bitstream that contains an H.264/AVC compatible base layer (BL) and a scalable enhancement layer (EL). If an H.264/AVC decoder is available at the client end, only the base layer sub-bitstream is decoded and the decoded 8-bit video can be viewed on a conventional 8-bit display device; if the color bit depth scalable decoder is available at the client end, both the BL and the EL sub-bitstreams will be decoded to obtain the 12-bit video and it can be viewed on a high quality display device that supports more than eight bit.

According to one aspect of the invention, one or more new syntax elements allow to signal whether inter-layer prediction for bit depth scalability shall be invoked, and if so then whether the operation of bit-shift is utilized as the bit depth inter-layer prediction or an advanced bit depth prediction is utilized as the bit depth inter-layer prediction, wherein the advanced bit depth prediction methods comprise at least one of the localized polynomial approximation method or the smoothed histogram method.

### Brief description of the drawings

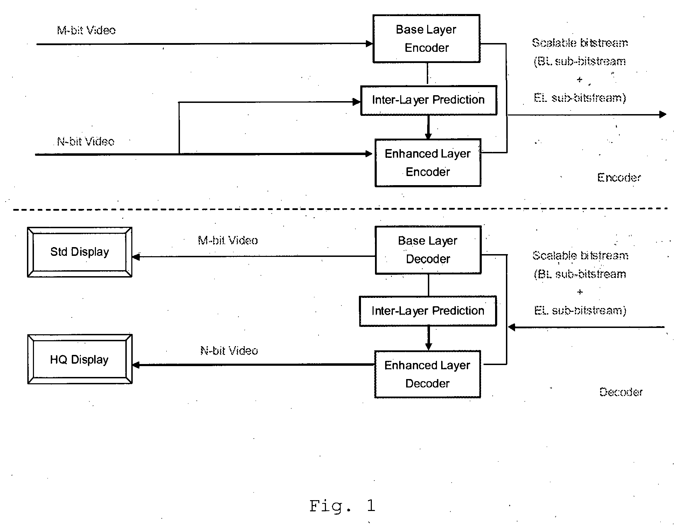

Fig.1 illustrates a framework of bit depth scalable coding.

### Detailed description of the preferred embodiment

The framework of the presented color bit depth scalable coding is shown in Fig.1. In Fig.1, two videos will be used as an input to the video codec: N-bit raw video and M-bit (usually 8-bit) video (N>M). The M-bit video can be either converted from the N-bit raw video or given by other ways.

The M-bit video is encoded as the BL using the inside H.264/AVC encoder. The N-bit video is encoded as the EL using the scalable encoder. The coding efficiency of the EL can be significantly improved by utilizing the information of the BL. We call the utilization of the BL information in encoding the EL *inter-layer prediction*. Each picture - a group of macroblocks (MBs) - will have two access units, one for the BL and the other one for the EL. The coded bitstreams will be multiplexed to form a scalable bitstream.

During the decoding process, BL decoder will use only the BL sub-bitstream which is extracted from the whole bitstream, to provide a M-bit reconstructed video. By decoding the whole bitstream, N-bit video can be reconstructed.

In the following embodiment, we present a technical solution to color bit depth scalability. Two new syntax elements are added to the SVC sequence parameter set (SPS) in SVC extension (seq_parameter_set_svc_extension( )) to support color bit depth scalability: bit_depth_scalability_flag in line 13 of Tab.1 and bit_depth_pred_idc in line 15 of Tab.1.

**Tab.1: Two new syntax elements added to the sequence parameter set SVC extension syntax**

| | | C | Descriptor |
|---|---|---|---|
| 1 | seq_parameter_set_svc_extension( ) { | | |
| 2 | **extended_spatial_scalability** | 0 | u(2) |
| 3 | if ( chroma format idc > 0 ) { | | |
| 4 | **chroma_phase_x_plus1** | 0 | u(2) |
| 5 | **chroma_phase_y_plus1** | 0 | u(2) |
| 6 | } | | |
| 7 | if( extended_spatial_scalability = = 1) { | | |
| 8 | **scaled_base_left_offset** | 0 | se(v) |
| 9 | **scaled_base_top_offset** | 0 | se(v) |
| 10 | **scaled_base_right_offset** | 0 | se(v) |
| 11 | **scaled_base_bottom_offset** | 0 | se(v) |
| 12 | } | | |
| 13 | **bit_depth_scalability_flag** | 0 | u(1) |
| 14 | if ( bit_depth_scalability_flag ) { | | |
| 15 | **bit_depth_pred_idc** | 0 | ue(v) |
| 16 | } | | |
| 17 | **fgs_coding_mode** | 2 | u(l) |
| 18 | if( fgs_coding_mode = = 0 ) { | | |
| 19 | **groupingSizeMinus1** | 2 | ue(v) |
| 20 | } else { | | |
| 21 | numPosVector = 0 | | |
| 22 | do { | | |
| 23 | if( numPosVector = = 0) { | | |
| 24 | **scanIndex0** | 2 | ue(v) |
| 25 | } | | |
| 26 | else { | | |
| 27 | **deltaScanIndexMinus1[numPosVector]** | 2 | ue(v) |
| 28 | } | | |
| 29 | numPosVector ++ | | |
| 30 | } while( scanPosVectLuma[ numPosVector - 1 ] < 15 ) | | |
| 31 | } | | |

(continued)

| 32 | } | | |
|---|---|---|---|

Exemplarily, **bit_depth_scalability_flag** equal to 1 specifies that process of color bit depth prediction shall be invoked in the inter-layer prediction. Otherwise (equal to 0) specified that no process of color bit depth prediction shall be invoked (this may be used as default).
**bit_depth_pred_idc** equal to 0 specifies that the operation of bit-shift is utilized as the color bit depth inter-layer prediction (this may be used as default). Otherwise is reserved for advanced color bit depth prediction, as described below.

Another illustrative embodiment of the technical solution to enable bit depth scalability within the framework of SVC is shown in the following. Only one new syntax element is added to the sequence parameter set (SPS) SVC extension syntax (seq_parameter_set_svc_extension( )) to support bit depth scalability: bit_depth_pred_idc_plus1, as shown in line 13 of Table 2.

Tab.2: New syntax element (in line 13) added to the sequence parameter set SVC extension syntax

| 1 | seq_parameter_set_svc_extension( ) { | C | Descriptor |
|---|---|---|---|
| 2 | **extended_spatial_scalability** | 0 | u(2) |
| 3 | if ( chroma_format_idc > 0 ) { | | |
| 4 | **chroma_phase_x_plus1** | 0 | u(2) |
| 5 | **chroma_phase_y_plus1** | 0 | u(2) |
| 6 | } | | |
| 7 | if( extended_spatial_scalability = = 1 ) { | | |
| 8 | **scaled_base_left_offset** | 0 | se(v) |
| 9 | **scaled_base_top_offset** | 0 | se(v) |
| 10 | **scaled_base_right_offset** | 0 | se(v) |
| 11 | **scaled_base_bottom_offset** | 0 | se(v) |
| 12 | } | | |
| 13 | **bit_depth_pred_idc_plus1** | 0 | ue(v) |
| 14 | **fgs_coding_mode** | 2 | u(1) |
| 15 | if( fgs_coding_mode = = 0 ) { | | |
| 16 | **groupingSizeMinus1** | 2 | ue(v) |
| 17 | } else { | | |
| 18 | numPosVector = 0 | | |
| 19 | do { | | |
| 20 | if( numPosVector = = 0 ) { | | |
| 21 | **scanIndex0** | 2 | ue(v) |
| 22 | } | | |
| 23 | else { | | |
| 24 | **deltaScanIndexMinus1[numPosVector]** | 2 | ue(v) |
| 25 | } | | |
| 26 | numPosVector ++ | | |
| 27 | } while( scanPosVectLuma[ numPosVector - 1 ] < 15 ) | | |
| 28 | } | | |
| 29 | } | | |

In this example, **bit_depth_pred_idc_plus1** equal to 0 specifies that no process of bit depth prediction shall be invoked in the inter-layer prediction (default). Other values of **bit_depth_pred_idc_plus1** being greater than 0 specify the process of bit depth prediction in the inter-layer prediction (i.e. which prediction process is to be used).

In both, encoding and decoding processing, the intra texture upsampling procedure and the conventional inter texture (residual) upsampling invokes the (same) bit depth prediction procedure.

According to one aspect of the invention, a video encoding method comprises steps of
adding a first flag to indicate whether the process of bit depth scalable coding shall be invoked to the bitstream, adding a second flag to specify the prediction approach that is described below to the bitstream,
conducting the specified prediction approach to obtain the predicted version of the high bit depth input from the reconstructed version of the low bit depth input (base layer or lower enhancement layers), and
encoding the residual between the original version and predicted version of the high bit depth input as the enhancement layer.

An additional optional step is adding supplemental information for the specified prediction approach to the bitstream.

According to another aspect of the invention, a video decoding method comprises steps of
reconstructing lower layer video (BL or lower EL),
receiving a first flag and a second flag from the bitstream, determining from the first flag that the process of bit depth scalable coding shall be invoked,
determining from the second flag which bit depth prediction approach is to be used, wherein possible bit depth prediction approaches are bit shift and at least one of Smoothed Histogram and Localized Polynomial Approximation, conducting the determined prediction approach to obtain a predicted version of the high bit depth input from the reconstructed version of the low bit depth input, decoding the residual between the original version and predicted version of the high bit depth input from the enhancement layer bitstream, and
reconstructing the high bit depth input in terms of the predicted version of the high bit depth input and the residual between the original version and predicted version of the high bit depth input.

Bit shift means that one or more additional bits are appended to a value, with the most significant bit (MSB) remaining the MSB:

$$V_p \ = \ V_b \ 2^{N-8} \ + \ 2^{N-9}$$

where $V_b$ is a sample of the BL reconstruction picture and $Vp$ is the corresponding sample of the predicted N-bit video. If $V_e$ is a sample of the reconstructed EL and $V_r$ is the residual value then

$$V_e \ = \ V_p \ + \ V_r$$

E.g., if the 12-bit value is 1101_0100_0110, then the BL value is 1101_0100 and the residual is 1110:

$V_b$ = 1101_0100 (BL value)
$Vp$ = 1101_0100_1000 (prediction/reconstruction)
$V_d$ = 1101_0100_0110 - 1101_0100_1000 = 1110 (residual)
$V_d$ will be encoded, and when it is reconstructed it is $V_r$.

The purpose of adding $2^{N-9}$ is to use the median value, rather than the minimum or maximum value between $V_b*2^{N-8}$ and $(V_b+1)*2^{N-8}$. In general, high color bit-depth uses N bits and standard color bit-depth uses M bits (M<N). The prediction/ reconstruction value then has N bits, and the difference value (i.e. the residual) has N-M bits.

An optional step is to obtain supplemental information for the specified prediction approach from the bitstream.

In one embodiment, two new syntax elements are added to the sequence parameter set SVC extension syntax of the H.264/AVC to support bit depth scalability, wherein the conventional SVC intra texture upsampling procedure and the inter texture (residual) upsampling is modified to invoke the bit depth prediction procedure.

In one embodiment, only one new syntax element is added to the sequence parameter set SVC extension syntax of the H.264/AVC to support bit depth scalability and the intra texture upsampling procedure.

At least one of the advanced bit depth prediction methods is either the Smoothed Histogram method, or the Localized Polynomial Approximation method, as defined below.

Smoothed Histogram

This advanced bit depth prediction method comprises for encoding the following steps: generating a transfer function, e.g. in the form of a look-up table (LUT), which is suitable for mapping input color values to output color values, both consisting of $2^M$ different colors, applying the transfer function to a first video picture with low or conventional color bit-depth, generating a difference picture or residual between the transferred video picture and a second video picture with higher color bit-depth (N bit, with N>M; but may be same spatial resolution as the first video picture) and encoding the residual. Then, the encoded first video picture, parameters of the transfer function (e.g. the LUT itself) and the encoded residual are transmitted to a receiver. The parameters of the transfer function may also be encoded and transmitted. Further, the parameters of the transfer function are indicated as such.

In particular, the transfer function may be obtained by comparing color histograms of the first and the second video pictures, for which purpose the color histogram of the first picture, which has $2^M$ bins, is transformed into a "smoothed" color histogram with $2^N$ bins (N>M), and determining a transfer function from the smoothed histogram and the color enhancement layer histogram which defines a transfer between the values of the smoothed color histogram and the values of the color enhancement layer histogram. The described procedure is done separately for the basic display colors e.g. red, green, blue.

A method for decoding for this aspect of the invention comprises extracting from a bit stream video data for a first and a second video image and extracting color enhancement control data, furthermore decoding and reconstructing the first video image, wherein a reconstructed first video image is obtained having color pixel values with M bit each, and constructing from the color enhancement control data a mapping table that implements a transfer function. Then the mapping table is applied to each of the pixels of the reconstructed first video image, and the resulting transferred video image serves as prediction image which is then updated with the decoded second video image. The decoded second video image is a residual image, and the updating results in an enhanced video image which has pixel values with N bit each (N>M), and therefore a higher color space than the reconstructed first video image.

The above steps are performed separately for each of the basic video colors e.g. red, green and blue. Thus, a complete video signal may comprise for each picture an encoded low color-resolution image, and for each of these colors an encoded residual image and parameters of a transfer function, both for generating a higher color-resolution image. Advantageously, generating the transfer function and the residual image is performed on the R-G-B values of the raw video image, and is therefore independent from the further video encoding. Thus, the low color-resolution image can then be encoded using any conventional encoding, e.g. according to an MPEG or JVT standard (AVC, SVC etc.). Also on the decoding side the color enhancement is performed on top of the conventional decoding, and therefore independent from its encoding format.

Details of the Smoothed Histogram approach are disclosed in WO2008/019524.

Localized polynomial approximation

According to this aspect of the invention, a spatially localized approach for bit depth prediction by polynomial approximation is employed. Two video sequences are considered that describe the same scene and contain the same number of frames. Two frames that come from the two sequences respectively and have the same picture order count (POC), i.e. the same time stamp, are called a "synchronized frame pair" herein. For each synchronized frame pair, the corresponding/ collocated pixels (meaning two pixels that belong to the two frames respectively but have the same coordinates in the image coordinate system) refer to the same scene location or real-world location. The only difference between the corresponding pixels is the color bit depth, corresponding to color resolution. PSNR may be used as difference measurement between pictures, e.g. original and encoded picture.

A corresponding method for encoding a first color layer of a video image, wherein the first color layer comprises pixels of a given color and each of the pixels has a color value of a first depth, comprises the steps of generating or receiving a second color layer of the video image, wherein the second color layer comprises pixels of said given color and each of the pixels has a color value of a second depth being less than the first depth, dividing the first color layer into first blocks and the second color layer into second blocks, wherein the first blocks have the same number of pixels as the second blocks and the same position within their respective image, determining for a first block of the first color layer a corresponding second block of the second color layer, transforming the values of pixels of the second block into the values of pixels of a third block using a linear transform function that minimizes the difference between the first block and the predicted third block, calculating the difference between the predicted third block and the first block, and encoding the second block, the coefficients of the linear transform function and said difference.

All pixels of a block may use the same transform, while the transform may be individual for each pair of a first block and its corresponding second block.

In one embodiment, a pixel at a position u,v in the first block is obtained from the corresponding pixel at the same position in the second block according to

$$BN_{i,1}(u,v) = (BM_{i,1}(u,v))^n c_n + (BM_{i,1}(u,v))^{n-1} c_{n-1} + \ldots$$
$$+ (BM_{i,1}(u,v))^{1/m} c_{1/m} + c_0$$

with the coefficients being $C_n$, $C_{n-1}$, ..., $C_0$.

The linear transform function may be determined by the least square fit method. The method may further comprise the steps of formatting the coefficients as metadata, and transmitting said metadata attached to the encoded second block and said difference.

For this aspect of the invention, a method for decoding a first color layer of a video image, wherein the first color layer comprises pixels of a given color and each of the pixels has a color value of a first depth, comprises the steps of decoding a second color layer of the video image, wherein the second color layer comprises pixels of said given color and each of the pixels has a color value of a second depth being less than the first depth, decoding coefficients of a linear transform function, decoding a residual block or image, applying the transform function having said decoded coefficients to the decoded second color layer of the video image, wherein a predicted first color layer of the video image is obtained, and updating the predicted first color layer of the video image with the residual block or image.

More details of the Localized Polynomial Approximation approach are disclosed in WO2008/043198.

The invention presents a scalable solution to encode the whole 12-bit raw video once to generate one bitstream that contains an H.264/AVC compatible base layer and a scalable enhancement layer. If a color bit depth scalable decoder is available at the client end, both the base layer and the enhancement layer sub-bitstreams will be decoded to obtain the 12-bit video and it can be viewed on a high quality display that supports more than eight bit; otherwise only the base layer sub-bitstream is decoded using an H.264/AVC decoder and the decoded 8-bit video can be viewed on a conventional 8-bit display. The enhancement layer contains a residual based on a prediction from the base layer, which is either based on bit-shift or based on an advanced bit depth prediction is utilized, wherein the advanced bit depth prediction method is a Smoothed Histogram method or a Localized Polynomial Approximation method.

## Claims

1.   A method for encoding video data in a bit depth scalable manner, wherein an enhancement layer video is predicted from a reconstructed base layer video, and wherein at least one indication is added to the data to define the process of bit depth scalability, wherein

- if the indication has a first value, no bit depth inter-layer prediction is utilized;
- if the indication has a second value, it specifies that bit depth inter-layer prediction based on bit-shift is utilized; and
- if the indication has another than the first or second value, bit depth inter-layer prediction based on an advanced bit depth prediction is utilized, the advanced bit depth prediction comprising the following steps:
- generating a transfer function suitable for mapping input color values to output color values;
- applying the transfer function to a first video picture of the base layer video with a color bit-depth of M bit, wherein a transferred first video picture with a color bit-depth of M bit is obtained;
- generating a difference picture or residual between the transferred first video picture and a second video picture of the enhancement layer, the second video picture having a higher color bit-depth of N bit, with N>M; and
- encoding the residual, the first video picture and the parameters of the transfer function; **characterised in that** the advanced bit depth prediction is a smoothed histogram method, according to which the transfer function is obtained by comparing color histograms of the first and the second video pictures, for which purpose the color histogram of the first picture having $2^M$ bins is transformed into a smoothed color histogram having $2^N$ bins, and by determining a transfer function from the smoothed color histogram and the color enhancement layer histogram having $2^N$ bins, which transfer function defines a transfer between the values of the smoothed color histogram and the values of the color enhancement layer histogram.

2.   A method for encoding video data in a bit depth scalable manner, wherein an enhancement layer video is predicted from a reconstructed base layer video, and wherein at least one indication is added to the data to define the process of bit depth scalability, wherein

- if the indication has a first value, no bit depth inter-layer prediction is utilized;
- if the indication has a second value, it specifies that bit depth inter-layer prediction based on bit-shift is utilized; and

- if the indication has another than the first or second value, bit depth inter-layer prediction based on an advanced bit depth prediction is utilized, said advanced bit depth prediction being a Localized Polynomial Approximation method for encoding a first color layer of a video image, wherein the first color layer comprises pixels of a given color and each of the pixels has a color value of a first bit depth N, the Localized Polynomial Approximation method comprising the following steps:

- generating or receiving a second color layer of the video image, wherein the second color layer comprises pixels of said given color and each of the pixels has a color value of a second bit depth M being less than the first bit depth N;

- dividing the first color layer into first blocks and the second color layer into second blocks, wherein the first blocks have the same number of pixels as the second blocks and the same position within their respective image;

- determining for a first block of the first color layer a corresponding second block of the second color layer;

- transforming the values of pixels of the second block into the values of pixels of a predicted third block using a linear transform function that minimizes the difference between the first block and the predicted third block;

- calculating the difference between the predicted third block and the first block; and

- encoding the second block, the coefficients of the linear transform function and said difference.

3. A method for decoding bit depth scalable video data comprising the steps of

- extracting at least one indication from encoded video data, the indication being indicative of a process of bit depth scalability;

- decoding the video according to the indication, wherein

- if the indication has a first value, then bit depth inter-layer prediction is not utilized;

- if the indication has a second value, bit depth inter-layer prediction based on bit-shift is utilized; and

- if the indication has another than said first or second value, then bit depth inter-layer prediction based on an advanced bit depth prediction is utilized; and

- decoding and reconstructing a first color layer of video having a color bit depth of M bit;

wherein said advanced bit depth prediction comprises the following steps:

- receiving parameters of a transfer function suitable for mapping input color values to output color values;

- receiving a difference picture or residual;

- decoding the residual;

- applying the transfer function to a first video picture of the first color layer, wherein a transferred first video picture is obtained; and

- reconstructing from the transferred first video picture and the decoded residual a second video picture with higher color bit-depth of N bit, with N>M; **characterised in that** the advanced bit depth prediction is a smoothed histogram method, according to which the parameters of the transfer function define a transfer between the values of a smoothed color histogram of the first video picture and the values of a color enhancement layer histogram of the second video picture.

4. A method according to claim 1 or 3, wherein the steps of the advanced bit depth prediction method are performed separately for the display colors red, green and blue.

5. A method for decoding bit depth scalable video data comprising the steps of

- extracting at least one indication from encoded video data, the indication being indicative of a process of bit depth scalability;

- decoding the video according to the indication, wherein

- if the indication has a first value, then bit depth inter-layer prediction is not utilized;

- if the indication has a second value, bit depth inter-layer prediction based on bit-shift is utilized; and

- if the indication has another than said first or second value, then bit depth inter-layer prediction based on an advanced bit depth prediction is utilized; and

wherein said advanced bit depth prediction is a Localized Polynomial Approximation method comprising the following steps:

- receiving and decoding a residual and coefficients of a linear transform function;

- receiving and decoding a first color layer of the video image, wherein the first color layer comprises pixels of a given color and each of the pixels has a color value of a first bit depth M;
- dividing the first color layer into first blocks;
- determining for a first block of the first color layer a corresponding second block of a second color layer, wherein the second block has the same number of pixels as the first block and wherein the first and second block have the same position within their respective images;
- reconstructing the second block by transforming the values of pixels of the first block having M bit to values of pixels of the second block having N bit, using a linear transform function according to the received coefficients, and adding the decoded residual.

6. A method according to claim 2 or 5, wherein said linear transform function is applied to all pixels of a block, and for different pairs of a first and corresponding second block individual linear transform functions are used.

7. A device for encoding bit depth scalable video data, comprising

- means for encoding a video base layer;
- means for encoding a video enhancement layer, comprising first and second means for generating a bit depth inter-layer prediction from the base layer, wherein the first means for generating a bit depth inter-layer prediction uses bit-shift and the second means for generating a bit depth inter-layer prediction uses an advanced bit depth prediction; and
- means for adding at least one indication to the data to indicate the utilized method for performing bit depth inter-layer prediction, wherein
if no bit depth inter-layer prediction is utilized the indication has a first value,
if bit-shift is utilized the indication has a second value; and
if bit depth inter-layer prediction based on said advanced bit depth prediction is utilized, the indication has another than the first or second value;

wherein said advanced bit depth prediction comprises :

- generating a transfer function suitable for mapping input color values to output color values;
- applying the transfer function to a first video picture of the base layer video with a color bit-depth of M bit, wherein a transferred first video picture with a color bit-depth of M bit is obtained;
- generating a difference picture or residual between the transferred first video picture and a second video picture of the enhancement layer, the second video picture having a higher color bit-depth of N bit, with N>M; and
- encoding the residual, the first video picture and the parameters of the transfer function; **characterised in that** the advanced bit depth prediction is a smoothed histogram method, according to which the transfer function is obtained by comparing color histograms of the first and the second video pictures, for which purpose the color histogram of the first picture having $2^M$ bins is transformed into a smoothed color histogram having $2^N$ bins, and by determining a transfer function from the smoothed color histogram and the color enhancement layer histogram having $2^N$ bins, which transfer function defines a transfer between the values of the smoothed color histogram and the values of the color enhancement layer histogram.

8. A device for encoding bit depth scalable video data, comprising

- means for encoding a video base layer;
- means for encoding a video enhancement layer, comprising first and second means for generating a bit depth inter-layer prediction from the base layer, wherein the first means for generating a bit depth inter-layer prediction uses bit-shift and the second means for generating a bit depth inter-layer prediction uses an advanced bit depth prediction; and
- means for adding at least one indication to the data to indicate the utilized method for performing bit depth inter-layer prediction, wherein
if no bit depth inter-layer prediction is utilized the indication has a first value,
if bit-shift is utilized the indication has a second value; and
if bit depth inter-layer prediction based on said advanced bit depth prediction is utilized, the indication has another than the first or second value;

wherein the advanced bit depth prediction is a Localized Polynomial Approximation method for encoding a first color layer of a video image, the first color layer comprising pixels of a given color and each of the pixels having a color value of a first bit depth N, and wherein the Localized Polynomial Approximation method comprises:

- generating or receiving a second color layer of the video image, wherein the second color layer comprises pixels of said given color and each of the pixels has a color value of a second bit depth M being less than the first bit depth N;
- dividing the first color layer into first blocks and the second color layer into second blocks, wherein the first blocks have the same number of pixels as the second blocks and the same position within their respective image;
- determining for a first block of the first color layer a corresponding second block of the second color layer;
- transforming the values of pixels of the second block into the values of pixels of a predicted third block using a linear transform function that minimizes the difference between the first block and the predicted third block;
- calculating the difference between the predicted third block and the first block; and
- encoding the second block, the coefficients of the linear transform function and said difference.

9. A device for decoding bit depth scalable video data, comprising

- means for decoding a video base layer;
- means for decoding a video enhancement layer, comprising first and second means for generating a bit depth inter-layer prediction from the decoded base layer, wherein the first means for generating a bit depth inter-layer prediction uses bit-shift and the second means for generating a bit depth inter-layer prediction uses an advanced bit depth prediction; and
- means for extracting at least one indication from the encoded video data, the indication defining the utilized method for performing bit depth inter-layer prediction, wherein
if the indication has a first value then no bit depth inter-layer prediction is utilized,
if the indication has a second value then bit-shift is utilized; and
if the indication has another than the first or second value,

bit depth inter-layer prediction based on said advanced bit depth prediction is utilized, wherein said advanced bit depth prediction comprises the following steps:

- receiving parameters of a transfer function suitable for mapping input color values to output color values;
- receiving a difference picture or residual;
- decoding the residual;
- applying the transfer function to a first video picture of the first color layer, wherein a transferred first video picture is obtained; and
- reconstructing from the transferred first video picture and the decoded residual a second video picture with higher color bit-depth of N bit, with N>M; **characterised in that** the advanced bit depth prediction is a smoothed histogram method, according to which the parameters of the transfer function define a transfer between the values of a smoothed color histogram of the first video picture and the values of a color enhancement layer histogram of the second video picture.

10. A device for decoding bit depth scalable video data, comprising

- means for decoding a video base layer;
- means for decoding a video enhancement layer, comprising first and second means for generating a bit depth inter-layer prediction from the decoded base layer, wherein the first means for generating a bit depth inter-layer prediction uses bit-shift and the second means for generating a bit depth inter-layer prediction uses an advanced bit depth prediction; and
- means for extracting at least one indication from the encoded video data, the indication defining the utilized method for performing bit depth inter-layer prediction, wherein
if the indication has a first value then no bit depth inter-layer prediction is utilized,
if the.indication has a second value then bit-shift is utilized; and
if the indication has another than the first or second value, bit depth inter-layer prediction based on said advanced bit depth prediction is utilized, wherein said advanced bit depth prediction is a Localized Polynomial Approximation method comprising the following steps:

- receiving and decoding a residual and coefficients of a linear transform function;
- receiving and decoding a first color layer of the video image, wherein the first color layer comprises pixels of a given color and each of the pixels has a color value of a first bit depth M;
- dividing the first color layer into first blocks;
- determining for a first block of the first color layer a corresponding second block of a second color layer, wherein the second block has the same number of pixels as the first block and wherein the first and second block have the same position within their respective images;
- reconstructing the second block by transforming the values of pixels of the first block having M bit to values of pixels of the second block having N bit, using a linear transform function according to the received coefficients, and adding the decoded residual.

**Patentansprüche**

1. Verfahren zum Codieren von Videodaten auf Bittiefenskalierbare Weise, wobei aus einem rekonstruierten Basisschichtvideo ein Erweiterungsschichtvideo vorhergesagt wird, und wobei zu den Daten mindestens eine Angabe hinzugefügt wird, um den Prozess der Bittiefen-Skalierbarkeit zu definieren, wobei:

   - falls die Angabe einen ersten Wert aufweist, keine Bittiefen-Zwischenschichtvorhersage genutzt wird;
   - falls die Angabe einen zweiten Wert aufweist, dieser spezifiziert, dass die Bittiefen-Zwischenschichtvorhersage auf der Grundlage einer Bitverschiebung genutzt wird; und
   - falls die Angabe einen anderen als den ersten oder den zweiten Wert aufweist, die Bittiefen-Zwischenschichtvorhersage auf der Grundlage einer fortgeschrittenen Bittiefenvorhersage genutzt wird, wobei die fortgeschrittene Bittiefenvorhersage die folgenden Schritte umfasst:
   - Erzeugen einer Übertragungsfunktion, die geeignet ist, Eingangsfarbwerte auf Ausgangsfarbwerte abzubilden;
   - Anwenden der Übertragungsfunktion auf ein erstes Videobild des Basisschichtvideos mit einer Farbbittiefe von M Bit, wobei ein übertragenes erstes Videobild mit einer Farbbittiefe von M Bit erhalten wird;
   - Erzeugen eines Differenzbilds oder eines Rests zwischen dem übertragenen ersten Videobild und einem zweiten Videobild der Erweiterungsschicht, wobei das zweite Videobild eine höhere Farbbittiefe von N Bit aufweist, wobei N > M ist; und
   - Codieren des Rests, des ersten Videobilds und der Parameter der Übertragungsfunktion;

   **dadurch gekennzeichnet, dass**
   die fortgeschrittene Bittiefenvorhersage ein Verfahren eines geglätteten Histogramms ist, in Übereinstimmung mit dem die Übertragungsfunktion durch Vergleichen von Farbhistogrammen des ersten und des zweiten Videobilds, wobei das Farbhistogramm des Farbbilds, das $2^M$ Bins aufweist, zu diesem Zweck in ein geglättetes Farbhistogramm, das $2^N$ Bins aufweist, transformiert wird, und durch Bestimmen einer Übertragungsfunktion aus dem geglätteten Farbhistogramm und aus dem Farberweiterungsschichthistogramm, das $2^N$ Bins aufweist, wobei die Übertragungsfunktion eine Übertragung zwischen den Werten des geglätteten Farbhistogramms und den Werten des Farberweiterungsschichthistogramms definiert, erhalten wird.

2. Verfahren zum Codieren von Videodaten auf Bittiefenskalierbare Weise, wobei aus einem rekonstruierten Basisschichtvideo ein Erweiterungsschichtvideo vorhergesagt wird, und wobei zu den Daten mindestens eine Angabe hinzugefügt wird, um den Prozess der Bittiefen-Skalierbarkeit zu definieren, wobei:

   - falls die Angabe einen ersten Wert aufweist, keine Bittiefen-Zwischenschichtvorhersage genutzt wird;
   - falls die Angabe einen zweiten Wert aufweist, dieser spezifiziert, dass eine Bittiefen-Zwischenschichtvorhersage auf der Grundlage einer Bitverschiebung genutzt wird; und
   - falls die Angabe einen anderen als den ersten oder den zweiten Wert aufweist, eine Bittiefen-Zwischenschichtvorhersage auf der Grundlage einer fortgeschrittenen Bittiefenvorhersage genutzt wird, wobei die fortgeschrittene Bittiefenvorhersage ein Localized-Polynomial-Approximation-Verfahren zum Codieren einer ersten Farbschicht eines Videobilds ist, wobei die erste Farbschicht Pixel einer gegebenen Farbe umfasst und wobei jedes der Pixel einen Farbwert mit einer ersten Bittiefe N aufweist, wobei das Localized-Polynomial-Approximation-Verfahren die folgenden Schritte umfasst:

   - Erzeugen oder Empfangen einer zweiten Farbschicht des Videobilds, wobei die zweite Farbschicht Pixel der gegebenen Farbe umfasst und wobei jedes der Pixel einen Farbwert mit einer zweiten Bittiefe M aufweist, die kleiner als die erste Bittiefe N ist;
   - Teilen der ersten Farbschicht in erste Blöcke und der zweiten Farbschicht in zweite Blöcke, wobei die ersten Blöcke dieselbe Anzahl von Pixeln wie die zweiten Blöcke und innerhalb ihres jeweiligen Bilds dieselbe Position aufweisen;
   - Bestimmen eines entsprechenden zweiten Blocks der zweiten Farbschicht für einen ersten Block der ersten Farbschicht;

- Transformieren der Werte der Pixel des zweiten Blocks in die Werte der Pixel eines vorhergesagten dritten Blocks unter Verwendung einer linearen Transformationsfunktion, die die Differenz zwischen dem ersten Block und dem vorhergesagten dritten Block minimiert;
- Berechnen der Differenz zwischen dem vorhergesagten dritten Block und dem ersten Block; und
- Codieren des zweiten Blocks, der Koeffizienten der linearen Transformationsfunktion und der Differenz.

3. Verfahren zum Decodieren von Bittiefen-skalierbaren Videodaten, wobei das Verfahren die folgenden Schritte umfasst:

- Extrahieren mindestens einer Angabe aus codierten Videodaten, wobei die Angabe einen Prozess der Bittiefen-Skalierbarkeit angibt;
- Decodieren des Videos in Übereinstimmung mit der Angabe, wobei:
- falls die Angabe einen ersten Wert aufweist, die Bittiefen-Zwischenschichtvorhersage nicht genutzt wird;
- falls die Angabe einen zweiten Wert aufweist, die Bittiefen-Zwischenschichtvorhersage auf der Grundlage einer Bitverschiebung genutzt wird; und
- falls die Angabe einen anderen als den ersten oder den zweiten Wert aufweist, die Bittiefen-Zwischenschichtvorhersage auf der Grundlage einer fortgeschrittenen Bittiefenvorhersage genutzt wird; und
- Decodieren und Rekonstruieren einer ersten Farbschicht des Videos, die eine Farbbittiefe von M Bit aufweist;

wobei die fortgeschrittene Bittiefenvorhersage die folgenden Schritte umfasst:

- Empfangen von Parametern einer Übertragungsfunktion, die geeignet ist, Eingangsfarbwerte auf Ausgangsfarbwerte abzubilden;
- Empfangen eines Differenzbilds oder eines Rests;
- Decodieren des Rests;
- Anwenden der Übertragungsfunktion auf ein erstes Videobild der ersten Farbschicht, wobei ein übertragenes erstes Videobild erhalten wird; und
- Rekonstruieren eines zweiten Videobilds mit einer höheren Farbbittiefe von N Bit, mit N > M, aus dem übertragenen ersten Videobild und aus dem decodierten Rest;

**dadurch gekennzeichnet, dass**
die fortgeschrittene Bittiefenvorhersage ein Verfahren eines geglätteten Histogramms ist, in Übereinstimmung mit dem die Parameter der Übertragungsfunktion eine Übertragung zwischen den Werten eines geglätteten Farbhistogramms des ersten Videobilds und den Werten eines Farberweiterungsschichthistogramms des zweiten Videobilds definieren.

4. Verfahren nach Anspruch 1 oder 3, wobei die Schritte des fortgeschrittenen Bittiefen-Vorhersageverfahrens für die Anzeigefarben Rot, Grün und Blau getrennt ausgeführt werden.

5. Verfahren zum Decodieren von Bittiefen-skalierbaren Videodaten, wobei das Verfahren die folgenden Schritte umfasst:

- Extrahieren mindestens einer Angabe aus codierten Videodaten, wobei die Angabe einen Prozess der Bittiefen-Skalierbarkeit angibt;
- Decodieren des Videos in Übereinstimmung mit der Angabe, wobei:
- falls die Angabe einen ersten Wert aufweist, die Bittiefen-Zwischenschichtvorhersage nicht genutzt wird;
- falls die Angabe einen zweiten Wert aufweist, die Bittiefen-Zwischenschichtvorhersage auf der Grundlage einer Bitverschiebung genutzt wird; und
- falls die Angabe einen anderen als den ersten oder den zweiten Wert aufweist, die Bittiefen-Zwischenschichtvorhersage auf der Grundlage der fortgeschrittenen Bittiefenvorhersage genutzt wird; und

wobei die fortgeschrittene Bittiefenvorhersage ein Localized-Polynomial-Approximation-Verfahren ist, das die folgenden Schritte umfasst:

- Empfangen und Decodieren eines Rests und von Koeffizienten einer linearen Transformationsfunktion;
- Empfangen und Decodieren einer ersten Farbschicht des Videobilds, wobei die erste Farbschicht Pixel einer gegebenen Farbe umfasst und wobei jedes der Pixel einen Farbwert mit einer ersten Bittiefe M aufweist;
- Teilen der ersten Farbschicht in erste Blöcke;

- Bestimmen eines entsprechenden zweiten Blocks einer zweiten Farbschicht für einen ersten Block der ersten Farbschicht, wobei der zweite Block dieselbe Anzahl von Pixeln wie der erste Block aufweist und wobei der erste und der zweite Block innerhalb ihrer jeweiligen Bilder dieselbe Position aufweisen;

- Rekonstruieren des zweiten Blocks durch Transformieren der Werte von Pixeln des ersten Blocks, die M Bit aufweisen, in Werte von Pixeln des zweiten Blocks, die N Bit aufweisen, unter Verwendung einer linearen Transformationsfunktion in Übereinstimmung mit den empfangenen Koeffizienten, und Addieren des decodierten Rests.

6. Verfahren nach Anspruch 2 oder 5, wobei die lineare Transformationsfunktion auf alle Pixel eines Blocks angewendet wird und wobei für unterschiedliche Paare eines ersten und eines entsprechenden zweiten Blocks eigene lineare Transformationsfunktionen verwendet werden.

7. Vorrichtung zum Codieren von Bittiefen-skalierbaren Videodaten, wobei die Vorrichtung umfasst:

- ein Mittel zum Codieren einer Videobasisschicht;
- ein Mittel zum Codieren einer Videoerweiterungsschicht, wobei das Mittel ein erstes und ein zweites Mittel zum Erzeugen einer Bittiefen-Zwischenschichtvorhersage aus der Basisschicht umfasst, wobei das erste Mittel zum Erzeugen einer Bittiefen-Zwischenschichtvorhersage eine Bitverschiebung verwendet und das zweite Mittel zum Erzeugen einer Bittiefen-Zwischenschichtvorhersage eine fortgeschrittene Bittiefenvorhersage verwendet; und
- ein Mittel zum Hinzufügen mindestens einer Angabe zu den Daten, um das genutzte Verfahren zum Ausführen der Bittiefen-Zwischenschichtvorhersage anzugeben, wobei:

    falls keine Bittiefen-Zwischenschichtvorhersage genutzt wird, die Angabe einen ersten Wert aufweist, falls eine Bitverschiebung genutzt wird, die Angabe einen zweiten Wert aufweist; und
    falls eine Bittiefen-Zwischenschichtvorhersage auf der Grundlage der fortgeschrittenen Bittiefenvorhersage genutzt wird, die Angabe einen anderen als den ersten oder den zweiten Wert aufweist;

wobei die fortgeschrittene Bittiefenvorhersage umfasst:

    - Erzeugen einer Übertragungsfunktion, die geeignet ist, Eingangsfarbwerte auf Ausgangsfarbwerte abzubilden;
    - Anwenden der Übertragungsfunktion auf ein erstes Videobild des Basisschichtvideos mit einer Farbbittiefe von M Bit, wobei ein übertragenes erstes Videobild mit einer Farbbittiefe von M Bit erhalten wird;
    - Erzeugen eines Differenzbilds oder eines Rests zwischen dem übertragenen ersten Videobild und einem zweiten Videobild der Erweiterungsschicht, wobei das zweite Videobild eine höhere Farbbittiefe von N Bit aufweist, wobei N > M ist; und
    - Codieren des Rests, des ersten Videobilds und der Parameter der Übertragungsfunktion;

**dadurch gekennzeichnet, dass**
die fortgeschrittene Bittiefenvorhersage ein Verfahren eines geglätteten Histogramms ist, in Übereinstimmung mit dem die Übertragungsfunktion durch Vergleichen von Farbhistogrammen des ersten und des zweiten Videobilds, wobei das Farbhistogramm des Farbbilds, das $2^M$ Bins aufweist, zu diesem Zweck in ein geglättetes Farbhistogramm, das $2^N$ Bins aufweist, transformiert wird, und durch Bestimmen einer Übertragungsfunktion aus dem geglätteten Farbhistogramm und aus dem Farberweiterungsschichthistogramm, das $2^N$ Bins aufweist, wobei die Übertragungsfunktion eine Übertragung zwischen den Werten des geglätteten Farbhistogramms und den Werten des Farberweiterungsschichthistogramms definiert, erhalten wird.

8. Vorrichtung zum Codieren von Bittiefen-skalierbaren Videodaten, wobei die Vorrichtung umfasst:

- ein Mittel zum Codieren einer Videobasisschicht;
- ein Mittel zum Codieren einer Videoerweiterungsschicht, wobei das Mittel ein erstes und ein zweites Mittel zum Erzeugen einer Bittiefen-Zwischenschichtvorhersage aus der Basisschicht umfasst, wobei das erste Mittel zum Erzeugen einer Bittiefen-Zwischenschichtvorhersage eine Bitverschiebung verwendet und das zweite Mittel zum Erzeugen einer Bittiefen-Zwischenschichtvorhersage eine fortgeschrittene Bittiefenvorhersage verwendet; und
- ein Mittel zum Hinzufügen mindestens einer Angabe zu den Daten, um das genutzte Verfahren zum Ausführen der Bittiefen-Zwischenschichtvorhersage anzugeben, wobei:

falls keine Bittiefen-Zwischenschichtvorhersage genutzt wird, die Angabe einen ersten Wert aufweist, falls eine Bitverschiebung genutzt wird, die Angabe einen zweiten Wert aufweist; und

falls eine Bittiefen-Zwischenschichtvorhersage auf der Grundlage der fortgeschrittenen Bittiefenvorhersage genutzt wird, die Angabe einen anderen als den ersten oder den zweiten Wert aufweist;

wobei die fortgeschrittene Bittiefenvorhersage ein Localized-Polynomial-Approximation-Verfahren zum Codieren einer ersten Farbschicht eines Videobilds ist, wobei die erste Farbschicht Pixel einer gegebenen Farbe umfasst und wobei jedes der Pixel einen Farbwert mit einer ersten Bittiefe N aufweist, und wobei das Localized-Polynomial-Approximation-Verfahren umfasst:

- Erzeugen oder Empfangen einer zweiten Farbschicht des Videobilds, wobei die zweite Farbschicht Pixel der gegebenen Farbe umfasst und wobei jedes der Pixel einen Farbwert mit einer zweiten Bittiefe M aufweist, die kleiner als die erste Bittiefe N ist;
- Teilen der ersten Farbschicht in erste Blöcke und der zweiten Farbschicht in zweite Blöcke, wobei die ersten Blöcke dieselbe Anzahl von Pixeln wie die zweiten Blöcke und innerhalb ihres jeweiligen Bilds dieselbe Position aufweisen;
- Bestimmen eines entsprechenden zweiten Blocks der zweiten Farbschicht für einen ersten Block der ersten Farbschicht;
- Transformieren der Werte der Pixel des zweiten Blocks in die Werte der Pixel eines vorhergesagten dritten Blocks unter Verwendung einer linearen Transformationsfunktion, die die Differenz zwischen dem ersten Block und dem vorhergesagten dritten Block minimiert;
- Berechnen der Differenz zwischen dem vorhergesagten dritten Block und dem ersten Block; und
- Codieren des zweiten Blocks, der Koeffizienten der linearen Transformationsfunktion und der Differenz.

9. Vorrichtung zum Decodieren Bittiefen-skalierbarer Videodaten, wobei die Vorrichtung umfasst:

- ein Mittel zum Decodieren einer Videobasisschicht;
- ein Mittel zum Decodieren einer Videoerweiterungsschicht, wobei das Mittel ein erstes und ein zweites Mittel zum Erzeugen einer Bittiefen-Zwischenschichtvorhersage aus der decodierten Basisschicht umfasst, wobei das erste Mittel zum Erzeugen einer Bittiefen-Zwischenschichtvorhersage eine Bitverschiebung verwendet und das zweite Mittel zum Erzeugen einer Bittiefen-Zwischenschichtvorhersage eine fortgeschrittene Bittiefenvorhersage verwendet; und
- ein Mittel zum Extrahieren mindestens einer Angabe aus den codierten Videodaten, wobei die Angabe das genutzte Verfahren zum Ausführen der Bittiefen-Zwischenschichtvorhersage definiert, wobei:

falls die Angabe einen ersten Wert aufweist, keine Bittiefen-Zwischenschichtvorhersage genutzt wird, falls die Angabe einen zweiten Wert aufweist, eine Bitverschiebung genutzt wird; und

falls die Angabe einen anderen als den ersten oder den zweiten Wert aufweist, eine Bittiefen-Zwischenschichtvorhersage auf der Grundlage der fortgeschrittenen Bittiefenvorhersage genutzt wird,

wobei die fortgeschrittene Bittiefenvorhersage die folgenden Schritte umfasst:

- Empfangen von Parametern einer Übertragungsfunktion, die geeignet ist, Eingangsfarbwerte auf Ausgangsfarbwerte abzubilden;
- Empfangen eines Differenzbilds oder eines Rests;
- Decodieren des Rests;
- Anwenden der Übertragungsfunktion auf ein erstes Videobild der ersten Farbschicht, wobei ein übertragenes erstes Videobild erhalten wird; und
- Rekonstruieren eines zweiten Videobilds mit einer höheren Farbbittiefe von N Bit, mit N > M, aus dem übertragenen ersten Videobild und aus dem decodierten Rest;

**dadurch gekennzeichnet, dass**
die fortgeschrittene Bittiefenvorhersage ein Verfahren eines geglätteten Histogramms ist, in Übereinstimmung mit dem die Parameter der Übertragungsfunktion eine Übertragung zwischen den Werten eines geglätteten Farbhistogramms des ersten Videobilds und den Werten eines Farberweiterungsschichthistogramms des zweiten Videobilds definieren.

10. Vorrichtung zum Decodieren Bittiefen-skalierbarer Videodaten, wobei die Vorrichtung umfasst:

- ein Mittel zum Decodieren einer Videobasisschicht;
- ein Mittel zum Decodieren einer Videoerweiterungsschicht, wobei das Mittel ein erstes und ein zweites Mittel zum Erzeugen einer Bittiefen-Zwischenschichtvorhersage aus der decodierten Basisschicht umfasst, wobei das erste Mittel zum Erzeugen einer Bittiefen-Zwischenschichtvorhersage eine Bitverschiebung verwendet und das zweite Mittel zum Erzeugen einer Bittiefen-Zwischenschichtvorhersage eine fortgeschrittene Bittiefenvorhersage verwendet; und
- ein Mittel zum Extrahieren mindestens einer Angabe aus den codierten Videodaten, wobei die Angabe das genutzte Verfahren zum Ausführen der Bittiefen-Zwischenschichtvorhersage definiert,

wobei:

falls die Angabe einen ersten Wert aufweist, keine Bittiefen-Zwischenschichtvorhersage genutzt wird; falls die Angabe einen zweiten Wert aufweist, eine Bitverschiebung genutzt wird; und
falls die Angabe einen anderen als den ersten oder den zweiten Wert aufweist, die Bittiefen-Zwischenschichtvorhersage auf der Grundlage der fortgeschrittenen Bittiefenvorhersage genutzt wird, wobei die fortgeschrittene Bittiefenvorhersage ein Localized-Polynomial-Approximation-Verfahren ist,

das die folgenden Schritte umfasst:

- Empfangen und Decodieren eines Rests und von Koeffizienten einer linearen Transformationsfunktion;
- Empfangen und Decodieren einer ersten Farbschicht des Videobilds, wobei die erste Farbschicht Pixel einer gegebenen Farbe umfasst und wobei jedes der Pixel einen Farbwert mit einer ersten Bittiefe M aufweist;
- Teilen der ersten Farbschicht in erste Blöcke;
- Bestimmen eines entsprechenden zweiten Blocks einer zweiten Farbschicht für einen ersten Block der ersten Farbschicht, wobei der zweite Block dieselbe Anzahl von Pixeln wie der erste Block aufweist und wobei der erste und der zweite Block innerhalb ihrer jeweiligen Bilder dieselbe Position aufweisen;
- Rekonstruieren des zweiten Blocks durch Transformieren der Werte von Pixeln des ersten Blocks, die M Bit aufweisen, in Werte von Pixeln des zweiten Blocks, die N Bit aufweisen, unter Verwendung einer linearen Transformationsfunktion in Übereinstimmung mit den empfangenen Koeffizienten, und Addieren des decodierten Rests.

## Revendications

1. Procédé de codage de données vidéo avec une échelonnabilité de profondeur de bits, dans lequel une vidéo de couche d'amélioration est prédite à partir d'une vidéo de couche de base reconstruite, et dans lequel au moins une indication est ajoutée aux données pour définir le processus d'échelonnabilité de profondeur de bits, dans lequel

- si l'indication présente une première valeur, aucune prédiction inter-couches de profondeur de bits n'est utilisée ;
- si l'indication présente une deuxième valeur, elle spécifie que la prédiction inter-couches de profondeur de bits basée sur le décalage de bits est utilisée ; et
- si l'indication présente une valeur autre que la première ou la deuxième valeur, la prédiction inter-couches de profondeur de bits basée sur une prédiction de profondeur de bits avancée est utilisée, la prédiction de profondeur de bits avancée comprenant les étapes suivantes :
- génération d'une fonction de transfert appropriée pour mapper des valeurs de couleur d'entrée à des valeurs de couleur de sortie ;
- application de la fonction de transfert à une première image vidéo de la vidéo de couche de base avec une profondeur de bits de couleur de M bits, où une première image vidéo transférée avec une profondeur de bits de couleur de M bits est obtenue ;
- génération d'une image de différence ou d'un résidu entre la première image vidéo transférée et une deuxième image vidéo de la couche d'amélioration, la deuxième image vidéo ayant une profondeur de bits de couleur supérieure de N bits, avec N > M ; et
- codage du résidu, de la première image vidéo et des paramètres de la fonction de transfert ;

caractérisé en ce que
la prédiction de profondeur de bits avancée est un procédé d'histogramme lissé, en fonction duquel la fonction de transfert est obtenue par la comparaison des histogrammes de couleur de la première et de la deuxième images vidéo, et à cette fin, l'histogramme de couleur de la première image ayant $2^M$ bins est transformé en histogramme de couleur lissé ayant $2^N$ bins, et par la détermination d'une fonction de transfert à partir de l'histogramme de couleur lissé et de l'histogramme de couche d'amélioration de couleur ayant $2^N$ bins, laquelle fonction de transfert définit un transfert entre les values de l'histogramme de couleur lissé et les valeurs de l'histogramme de couche d'amélioration de couleur.

**2.** Procédé de codage de données vidéo avec une échelonnabilité de profondeur de bits, dans lequel une vidéo de couche d'amélioration est prédite à partir d'une vidéo de couche de base reconstruite, et dans lequel au moins une indication est ajoutée aux données pour définir le processus d'échelonnabilité de profondeur de bits, dans lequel

- si l'indication présente une première valeur, aucune prédiction inter-couches de profondeur de bits n'est utilisée ;
- si l'indication présente une deuxième valeur, elle spécifie que la prédiction inter-couches de profondeur de bits basée sur le décalage de bits est utilisée ; et
- si l'indication présente une valeur autre que la première ou la deuxième valeur, la prédiction inter-couches de profondeur de bits basée sur une prédiction de profondeur de bits avancée est utilisée, ladite prédiction de profondeur de bits avancée étant un procédé par approximation polynomiale localisée pour coder un première couche de couleur d'une image vidéo, où la première couche de couleur comprend des pixels d'une couleur donnée et chaque pixel présente une valeur de couleur d'une première profondeur de bits N, le procédé par approximation polynomiale localisée comprenant les étapes suivantes :
- génération ou réception d'une deuxième couche de couleur de l'image vidéo, où la deuxième couche de couleur comprend des pixels de ladite couleur donnée et chaque pixel présente une valeur de couleur d'une deuxième profondeur de bits M qui est inférieure à la première profondeur de bits N ;
- division de la première couche de couleur en premiers blocs et de la deuxième couche de couleur en deuxièmes blocs, où les premiers blocs présentent le même nombre de pixels que les deuxièmes blocs et la même position dans leur image respective ;
- détermination pour un premier bloc de la première couche de couleur d'un deuxième bloc correspondant de la deuxième couche de couleur ;
- transformation des valeurs des pixels du deuxième bloc en valeurs de pixels d'un troisième bloc prédit à l'aide d'une fonction de transformation linéaire qui minimise la différence entre le premier bloc et le troisième bloc prédit ;
- calcul de la différence entre le troisième bloc prédit et le premier bloc ; et
- codage du deuxième bloc, des coefficients de la fonction de transformation linéaire et de ladite différence.

**3.** Procédé de décodage de données vidéo avec une échelonnabilité de profondeur de bits comprenant les étapes suivantes :

- extraction d'au moins une indication des données vidéo codées, l'indication étant indicative d'un processus d'échelonnabilité de profondeur de bits ;
- décodage de la vidéo en fonction de l'indication, où
- si l'indication présente une première valeur, la prédiction inter-couches de profondeur de bits n'est pas utilisé ;
- si l'indication présente une deuxième valeur, la prédiction inter-couches de profondeur de bits basée sur le décalage de bits est utilisée ; et
- si l'indication présente une valeur autre que ladite première ou deuxième valeur, la prédiction inter-couches de profondeur de bits basée sur une prédiction de profondeur de bits avancée est utilisée ; et
- décodage et reconstruction d'une première couche de couleur de vidéo ayant une profondeur de bits de couleur de M bits ;

où ladite prédiction de profondeur de bits avancée comprend les étapes suivantes :

- réception de paramètres d'une fonction de transfert appropriée pour mapper des valeurs de couleur d'entrée à des valeurs de couleur de sortie ;
- réception d'une image de différence ou d'un résidu ;
- décodage du résidu ;
- application de la fonction de transfert à une première image vidéo de la première couche de couleur, où une première image vidéo transférée est obtenue ; et
- reconstruction à partir de la première image vidéo transférée et du résidu décodé d'une deuxième image vidéo ayant une profondeur de bits de couleur supérieure de N bits, avec N > M ; **caractérisé en ce que** la prédiction de profondeur de bits avancée est un procédé d'histogramme lissé selon lequel les paramètres de la fonction de transfert définissent un transfert entre les valeurs d'un histogramme de couleur lissé de la première image vidéo et les valeurs d'un histogramme de couche d'amélioration de couleur de la deuxième image vidéo.

**4.** Procédé selon la revendication 1 ou 3, dans lequel les étapes du procédé de prédiction de profondeur de bits avancée sont effectuées séparément pour les couleurs d'affichage rouge, vert et bleu.

**5.** Procédé de décodage de données vidéo avec une échelonnabilité de profondeur de bits comprenant les étapes suivantes :

- extraction d'au moins une indication des données vidéo codées, l'indication étant indicative d'un processus d'échelonnabilité de profondeur de bits ;
- décodage de la vidéo en fonction de l'indication, où
- si l'indication présente une première valeur, la prédiction inter-couches de profondeur de bits n'est pas utilisée ;
- si l'indication présente une deuxième valeur, la prédiction inter-couches de profondeur de bits basée sur le décalage de bits est utilisée ; et
- si l'indication présente une valeur autre que ladite première ou deuxième valeur, la prédiction inter-couches de profondeur de bits basée sur une prédiction de profondeur de bits avancée est utilisé ; et où ladite prédiction de profondeur de bits avancée est un procédé par approximation polynomiale localisée comprenant les étapes suivantes :
- réception et décodage d'un résidu et des coefficients d'une fonction de transformation linéaire ;
- réception et décodage d'une première couche de couleur de l'image vidéo, où la première couche de couleur comprend des pixels d'une couleur donnée et chaque pixel présente une valeur de couleur d'une première profondeur de bits M ;
- division de la première couche de couleur en premiers blocs ;
- détermination pour un premier bloc de la première couche de couleur d'un deuxième bloc correspondant d'une deuxième couche de couleur, où le deuxième bloc présente le même nombre de pixels que le premier bloc et où le premier et le deuxième blocs ont la même position dans leurs images respectives ;
- reconstruction du deuxième bloc par la transformation des valeurs de pixels du premier bloc ayant M bits en valeurs de pixels du deuxième bloc ayant N bits, utilisation d'une fonction de transformation linéaire selon les coefficients reçus et ajout du résidu décodé.

**6.** Procédé selon la revendication 2 ou 5, dans lequel ladite fonction de transformation linéaire est appliquée à tous les pixels d'un bloc, et pour différentes paires d'un premier bloc et d'un deuxième bloc correspondant des fonctions de transformation linéaire individuelles sont utilisées.

**7.** Appareil de codage de données vidéo avec une échelonnabilité de profondeur de bits comprenant :

- un moyen permettant de coder une couche de base vidéo ;
- un moyen permettant de coder une couche d'amélioration vidéo, comprenant un premier et un deuxième moyens permettant de générer une prédiction inter-couches de profondeur de bits à partir de la couche de base, où le premier moyen permettant de générer une prédiction inter-couches de profondeur de bits utilise le décalage de bits et le deuxième moyen permettant de générer une prédiction inter-couches de profondeur de bits utilise une prédiction de profondeur de bits avancée ; et
- un moyen permettant d'ajouter au moins une indication aux données pour indiquer le procédé utilisé pour effectuer la prédiction inter-couches de profondeur de bits, où

si aucune prédiction inter-couches de profondeur de bits n'est utilisée, l'indication présente une première valeur, si le décalage de bits est utilisé, l'indication présente une deuxième valeur ; et si la prédiction inter-couches de profondeur de bits basée sur ladite prédiction de profondeur de bits avancée est utilisée, l'indication présente une valeur autre que la première ou la deuxième valeur ; où ladite prédiction de profondeur de bits avancée comprend les étapes suivantes :

- génération d'une fonction de transfert appropriée pour mapper des valeurs de couleur d'entrée à des valeurs de couleur de sortie ;
- application de la fonction de transfert à une première image vidéo de la vidéo de couche de base avec une profondeur de bits de couleur de M bits, où une première image vidéo transférée avec une profondeur de bits de couleur de M bits est obtenue ;

- génération d'une image de différence ou d'un résidu entre la première image vidéo transférée et une deuxième image vidéo de la couche d'amélioration, la deuxième image vidéo ayant une profondeur de bits de couleur supérieure de N bits, avec N > M) ; et
- codage du résidu, de la première image vidéo et des paramètres de la fonction de transfert ;

**caractérisé en ce que**
la prédiction de profondeur de bits avancée est un procédé d'histogramme lissé, en fonction duquel la fonction de transfert est obtenue par la comparaison des histogrammes de couleur de la première et de la deuxième images vidéo, et à cette fin, l'histogramme de couleur de la première image ayant $2^N$ bins est transformé en histogramme de couleur lissé ayant $2^N$ bins, et par la détermination d'une fonction de transfert à partir de l'histogramme de couleur lissé et de l'histogramme de couche d'amélioration de couleur ayant $2^N$ bins, laquelle fonction de transfert définit un transfert entre les valeurs de l'histogramme de couleur lissé et les valeurs de l'histogramme de couche d'amélioration de couleur.

8. Appareil de codage de données vidéo avec une échelonnabilité de profondeur de bits comprenant :

- un moyen permettant de coder une couche de base vidéo ;
- un moyen permettant de coder une couche d'amélioration vidéo, comprenant un premier et un deuxième moyens permettant de générer une prédiction inter-couches de profondeur de bits à partir de la couche de base, où le premier moyen permettant de générer une prédiction inter-couches de profondeur de bits utilise le décalage de bits et le deuxième moyen permettant de générer une prédiction inter-couches de profondeur de bits utilise une prédiction de profondeur de bits avancée ; et
- un moyen permettant d'ajouter au moins une indication aux données pour indiquer le procédé utilisé pour effectuer la prédiction inter-couches de profondeur de bits, où
si aucune prédiction inter-couches de profondeur de bits n'est utilisée, l'indication présente une première valeur,
si le décalage de bits est utilisé, l'indication présente une deuxième valeur ; et
si la prédiction inter-couches de profondeur de bits basée sur ladite prédiction de profondeur de bits avancée est utilisée, l'indication présente une valeur autre que la première ou la deuxième valeur ;

où la prédiction de profondeur de bits avancée est un procédé par approximation polynomiale localisée pour coder une première couche de couleur d'une image vidéo, la première couche de couleur comprenant des pixels d'une couleur donnée et chaque pixel présentant une valeur de couleur d'une première profondeur de bits N, et où le procédé par approximation polynomiale localisée comprend les étapes suivantes :

génération ou réception d'une deuxième couche de couleur de l'image vidéo, où la deuxième couche de couleur comprend des pixels de ladite couleur donnée et chaque pixel présente une valeur de couleur d'une deuxième profondeur de bits M qui est inférieure à la première profondeur de bits N ;

- division de la première couche de couleur en premiers blocs et de la deuxième couche de couleur en deuxièmes blocs, où les premiers blocs présentent le même nombre de pixels que les deuxièmes blocs et la même position dans leur image respective ;
- détermination pour un premier bloc de la première couche de couleur d'un deuxième bloc correspondant de la deuxième couche de couleur ;
- transformation des valeurs des pixels du deuxième bloc en valeurs de pixels d'un troisième bloc prédit à l'aide d'une fonction de transformation linéaire qui minimise la différence entre le premier bloc et le troisième bloc prédit ;
- calcul de la différence entre le troisième bloc prédit et le premier bloc ; et
- codage du deuxième bloc, des coefficients de la fonction de transformation linéaire et de ladite différence.

9. Appareil de décodage de données vidéo avec une échelonnabilité de profondeur de bits comprenant :

- un moyen permettant de décoder une couche de base vidéo ;
- un moyen permettant de décoder une couche d'amélioration vidéo, comprenant un premier et un deuxième moyens permettant de générer une prédiction inter-couches de profondeur de bits à partir de la couche de base décodée, où le premier moyen permettant de générer une prédiction inter-couches de profondeur de bits utilise le décalage de bits et le deuxième moyen permettant de générer une prédiction inter-couches de profondeur de bits utilise une prédiction de profondeur de bits avancée ; et
- un moyen permettant d'extraire au moins une indication des données vidéo codées, l'indication définissant le procédé utilisé pour effectuer la prédiction inter-couches de profondeur de bits, où
- si l'indication présente une première valeur, aucune prédiction inter-couches de profondeur de bits n'est utilisée,

si l'indication présente une deuxième valeur, le décalage de bits est utilisé ; et

- si l'indication présente une valeur autre que la première ou la deuxième valeur, la prédiction inter-couches de profondeur de bits basée sur ladite prédiction de profondeur de bits avancée est utilisée, où ladite prédiction de profondeur de bits avancée comprend les étapes suivantes :
- réception de paramètres d'une fonction de transfert appropriée pour mapper des valeurs de couleur d'entrée à des valeurs de couleur de sortie ;
- réception d'une image de différence ou d'un résidu ;
- décodage du résidu ;
- application de la fonction de transfert à une première image vidéo de la première couche de couleur, où une première image vidéo transférée est obtenue ; et
- reconstruction à partir de la première image vidéo transférée et du résidu décodé d'une deuxième image vidéo ayant une profondeur de bits de couleur supérieure de N bits, avec N > M ; **caractérisé en ce que** la prédiction de profondeur de bits avancée est un procédé d'histogramme lissé selon lequel les paramètres de la fonction de transfert définissent un transfert entre les valeurs d'un histogramme de couleur lissé de la première image vidéo et les valeurs d'un histogramme de couche d'amélioration de couleur de la deuxième image vidéo.

10. Appareil de décodage de données vidéo avec une échelonnabilité de profondeur de bits comprenant :

- un moyen permettant de décoder une couche de base vidéo ;
- un moyen permettant de décoder une couche d'amélioration vidéo, comprenant un premier et un deuxième moyens permettant de générer une prédiction inter-couches de profondeur de bits à partir de la couche de base décodée, où le premier moyen permettant de générer une prédiction inter-couches de profondeur de bits utilise le décalage de bits et le deuxième moyen permettant de générer une prédiction inter-couches de profondeur de bits utilise une prédiction de profondeur de bits avancée ; et
- un moyen permettant d'extraire au moins une indication des données vidéo codées, l'indication définissant le procédé utilisé pour effectuer la prédiction inter-couches de profondeur de bits, où

si l'indication présente une première valeur, aucune prédiction inter-couches de profondeur de bits n'est utilisée,
si l'indication présente une deuxième valeur, le décalage de bits est utilisé ; et

- si l'indication présente une valeur autre que ladite première ou deuxième valeur, la prédiction inter-couches de profondeur de bits basée sur ladite prédiction de profondeur de bits avancée est utilisée, où ladite prédiction de profondeur de bits avancée est un procédé par approximation polynomiale localisée comprenant les étapes suivantes :
- réception et décodage d'un résidu et des coefficients d'une fonction de transformation linéaire ;
- réception et décodage d'une première couche de couleur de l'image vidéo, où la première couche de couleur comprend des pixels d'une couleur donnée et chaque pixel présente une valeur de couleur d'une première profondeur de bits M ;
- division de la première couche de couleur en premiers blocs ;
- détermination pour un premier bloc de la première couche de couleur d'un deuxième bloc correspondant d'une deuxième couche de couleur, où le deuxième bloc présente le même nombre de pixels que le premier bloc et où le premier et le deuxième blocs ont la même position dans leurs images respectives ;
- reconstruction du deuxième bloc par la transformation des valeurs de pixels du premier bloc ayant M bits en valeurs de pixels du deuxième bloc ayant N bits, utilisation d'une fonction de transformation linéaire selon les coefficients reçus et ajout du résidu décodé.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008049271 A
- WO 2008019524 A
- WO 2008043198 A